(19) **Europäisches Patentamt**

**European Patent Office**

**Office européen des brevets**

(11) Publication number: **0 065 139**

**B1**

(12) **EUROPEAN PATENT SPECIFICATION**

(45) Date of publication of patent specification: **08.07.87**

(51) Int. Cl.⁴: **G 01 B 11/275**

(21) Application number: **82103613.4**

(22) Date of filing: **28.04.82**

(54) **Individual toe measuring system.**

(30) Priority: **08.05.81 US 261445**

(43) Date of publication of application:
**24.11.82 Bulletin 82/47**

(45) Publication of the grant of the patent:
**08.07.87 Bulletin 87/28**

(84) Designated Contracting States:
**BE DE FR GB IT LU NL**

(56) References cited:
**DE-A-2 522 122**
**US-A-3 445 936**
**US-A-3 575 514**
**US-A-4 138 825**
**US-A-4 154 531**

(73) Proprietor: **FMC CORPORATION**
**200 East Randolph Drive**
**Chicago Illinois 60601 (US)**

(72) Inventor: **Lill, Melvin H.**
**6356 Whaley Drive**
**San Jose California 95135 (US)**

(74) Representative: **Bardehle, Heinz, Dipl.-Ing.**
**Patent- und Rechtsanwälte Bardehle-**
**Pagenberg-Dost-Altenburg & Partner**
**Galileiplatz 1 Postfach 86 06 20**
**D-8000 München 86 (DE)**

Courier Press, Leamington Spa, England.

## Description

The method aspect of the present invention is defined in claim 1 and the apparatus aspect in claim 4. Advantageous embodiments of the method are mentioned in claims 2 and 3 and of the apparatus in claims 5 to 10.

Apparatus providing rearward projecting light beams for use in determining the inclinations of front steerable wheels relative to the axis of rotation of one of the rear nonsteerable wheels are found in US—A—4,154,531, 4,150,897, 4,130,362, and 4,097,157. The US—A—4154531 discloses apparatus wherein the rearward projected beam is caused to swing through a predetermined angle. The beam is reflected by a mirror mounted in predetermined relationship with the axis of rotation of one of the rear nonsteerable wheels so that the oscillating beam is reflected back to a target mounted on the front steerable wheel on the same side of the vehicle. The time relationship between the instants when the projected oscillating beam is received by light sensitive devices when reflected toward a front wheel mounted target is used to determine the inclination of the front steerable wheel in the horizontal or toe plane.

The US—A—4,130,362 disclosure provides a multiplicity of beams projected at known angles relative to a reference angle from a projector mounted on one of the steerable front wheels of the vehicle. A mirror mounted on the rear wheel on the same side of the vehicle in predetermined relationship with the axis of rotation of the rear wheel reflects one of the projected beams back to the front wheel assembly. The reflected and received beam from the multiplicity of beams determines the inclination of the front wheel in the horizontal or toe plane.

The US—A—4097157 disclosure makes reference to a rearwardly projected beam which is reflected by a mirror mounted in predetermined relationship with a nonsteerable wheel on the same side of the vehicle. The reflected beam is received at an encoding target which is mounted on the front wheel on the same side of the vehicle to provide an indication of the inclination of the front wheel in the horizontal or toe plane relative to the axis of rotation of the rear wheel.

The US—A—4150897 disclosure relates to a rearwardly transmitted light beam from a front steerable wheel mounted assembly which is reflected by a rear wheel mounted mirror having predetermined orientation relative to the axis of rotation of the rear wheel. The front steerable wheels are adjusted in steering direction until the beam reflected from the rear wheel mounted mirror strikes a calibration point on the front wheel mounted assembly. The mirror on the rear wheel is then moved laterally so that the projected beam falls on a scale on the mirror at a point which is related to the desired toe setting for the front steerable wheels of the vehicle. The front steerable wheel is adjusted in toe so that the projected beam moves to a desired locaton on the rear mirror thereby setting known front wheel toe into the one front steerable wheel. The toe of the other front steerable wheel is set in the usual manner to obtain the desired total front steerable wheel toe. The apparatus automatically adjusts for different vehicle wheel spacings.

### Brief description of the drawings

Figure 1 is a diagrammatic plan view of an apparatus and method to measure individual steerable wheel toe relative to a vehicle chassis centerline.

Figure 2 is a diagrammatic plan view showing an apparatus and method to measure individual nonsteerable wheel toe relative to a vehicle chassis centerline.

Figure 3 is a diagrammatic plan view showing an apparatus and method to measure individual steerable wheel toe relative to the nonsteerable wheel average rolling direction.

Figure 4 is a top sectional view of a portion of one of the alignment heads shown in Figure 1 through 3 showing the incorporation of an aimable viewfinder in accordance with the present invention.

Figure 5 is an elevation sectional view of the aimable viewfinder of Figure 4.

Figure 6 is a sectional view taken along the lines 6—6 of Figure 5.

Figure 7 is a perspective view showing a plano prism configuration used in the disclosed embodiment of the invention.

Figure 8 is a perspective view showing a turning mechanism for the plano prisms in the disclosed embodiment.

### Description of the preferred embodiment

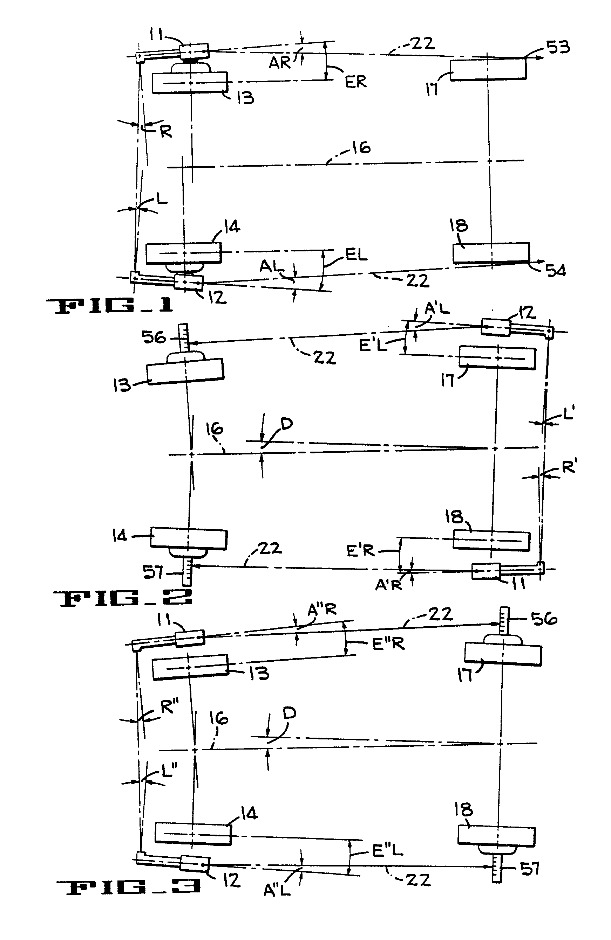

Wheel mounting alignment heads 11 and 12 are shown in Figure 1 such as those disclosed in U.S. Patents 4,097,157 or 4,150,897 mentioned hereinbefore. The alignment heads are mounted on a pair of front steerable wheels 13 and 14 supporting the front end of a vehicle chassis having a centerline 16 passing therethrough. A pair of nonsteerable rear wheels 17 and 18 support the rear end of the chassis. The alignment heads 11 and 12 are modified as compared to those disclosed in the aforementioned U.S. patents. The heads each contain an aimable viewfinder which may best be described by reference to Figures 4 through 6.

An aimable viewfinder 19 is shown in Figure 4 having an objective lens 21 exposed to light rays from an object located on a viewing path 22 extending from the viewfinder. The viewing path therefore extends from the rear side of the alignment heads 11 and 12 as seen in Figure 1. The viewing path 22 may be adjusted through a limited angle alpha on either side of the viewing path 22 in a substantially horizontal plane as shown in Figure 4. The objective lens 21 is mounted in an aperture in the rear of the existing

2

alignment head structure. A tubular member 23 is fixed in the alignment head surrounding an optical axis 25 extending through the lens. Adjacent to the objective lens 21 and on the image side of the lens, is a pair of holding rings 24 and 26, as seen in any of Figures 4, 5, 7 or 8. Fixed in the holding rings are a pair of plano prisms 27 and 28. The holding rings are mounted in a groove 29 formed in the interior of the alignment head structure so that they may rotate about the optical axis 25 of the objective lens 21. The holding rings 24 and 26 are captured between a shoulder 31 adjacent to the mounting boss for the objective lens and a shoulder 32 which is adjacent to a bore 30 in the alignment head structure which surrounds and engages the outside diameter of a tube member 23 (Figures 4 and 5).

A bevel gear 33 is formed on the holding ring 24 and a facing bevel gear 34 is formed on the holding ring 26 as best seen in Figure 8. The alignment head outer structure has a bore 36 therethrough in which is situated a bearing 37 supporting shaft 38 for rotation therein. The shaft extends through a rotary potentiometer 39 and is engageable at a knob 41 mounted on an accessible extension of the shaft 38. The shaft has a bevel pinion 42 disposed on the inward end thereof which engages the bevel gears 33 and 34 simultaneously. It may thus be seen that if the knob 41 is turned, the potentiometer wiper (not shown) is also turned, providing an output change from the rotary potentiometer 39. The shaft 38 and the bevel pinion 42 are also turned which causes the bevel gears 33 and 34 and the holding rings 24 and 26 to rotate in opposite directions within the groove 29.

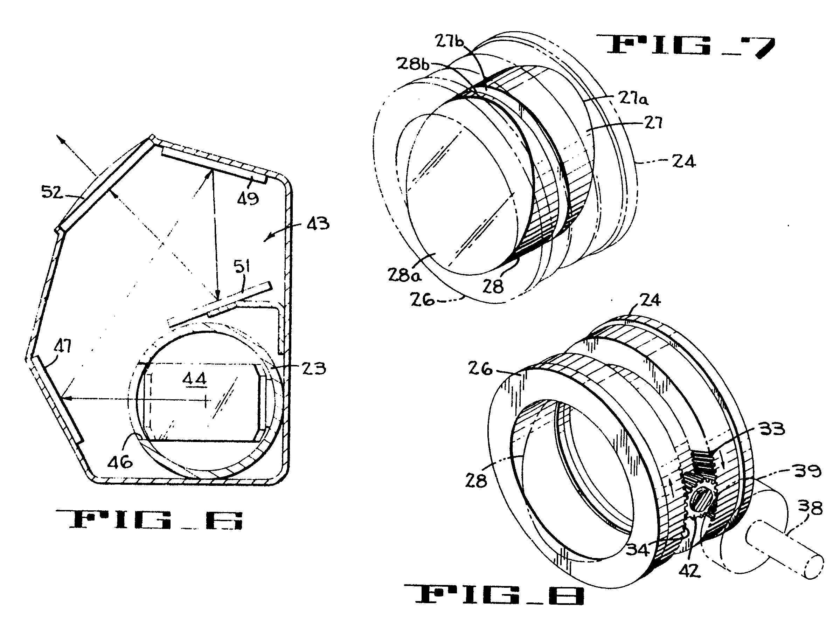

The plano prisms 27 and 28 are fixedly mounted within the holding rings 24 and 26 respectively. As may be seen in Figures 5 or 7, the prisms have flat angled faces 27a and 28a on one side and flat faces 27b and 28b on the other side. The latter flat faces are perpendicular to the cylindrical outer surfaces of the prisms and are mounted in the rings so that they are adjacent, parallel to one another and situated substantially perpendicular to the optical axis 25 through the tube member 23. The angled faces 27a and 28a are situated parallel to one another when the plano prisms are oriented so as to cause no lateral deflection through any portion of the angle alpha for the rays passing through the objective lens 21 from an object on the viewing path 22. This orientation of the plano prisms may be seen in Figures 5 and 7, wherein the prism 27 causes an upward deflection of rays passing through the objective lens and the plano prism 28 causes an equal and opposite downward deflection. Therefore, the rays passing through the plano prisms when oriented as shown in Figure 5 will proceed through the tube member 23 in the same direction as they approach the objective lens from the object. However, when the knob 41 is rotated causing one holding ring and plano prism to rotate in one direction and the other holding ring and plano prism to rotate in the opposite direction, while the vertical components of ray deflection will continue to cancel out, the lateral ray deflection components will add. Therefore, the rays passing through the objective lens 21 will appear to be adjusted angularly as they proceed through the tube member 23 apparently swinging through some portion of the angle alpha to one side or the other of the viewing path 22 dependent on the degree to which and the direction in which the knob 41 is turned. The rotary potentiometer 39 will provide an electrical output which is indicative of the rotation imparted to the plano prisms and therefore indicative of the angle in the substantially horizontal plane through which the rays from the object being viewed are deflected.

The objective lens 21 in this embodiment may have a focal length of approximately 27,9 cm. Considering the wheel bases of most vehicles on which this equipment is intended to be used, an optical assembly shown generally at 43 is mounted at a distance along the tube member from the objective lens which is about at the back focal distance of the objective lens for objects about wheel base distance in front of the lens. The optical assembly includes a vertically disposed plane mirror 44 mounted at about a 45° angle to a diameter of the tube member. Mirror 44 intercepts rays traveling through the tube member and reflects them through an opening 46 in the side of the tube member to impinge upon an oblique plane mirror 47 which is mounted just outside the tube member. The oblique mirror is mounted at an angle which is nearly 45° with the vertical if the rays are to be reflected directly from the oblique mirror to a viewing lens. The oblique mirror is mounted on the path of rays passing through the objective lens substantially at the aforementioned back focal distance of the lens. In this example the back focal distance may be approximately 32,1 cm. Therefore, a real image is constructed approximately at the surface of the oblique mirror 47. An index line 48 is formed from top to bottom centrally on the surface of the mirror. The index line will therefore appear superimposed on the real image constructed by the objective lens to an observer of the rays reflected from the oblique mirror 47.

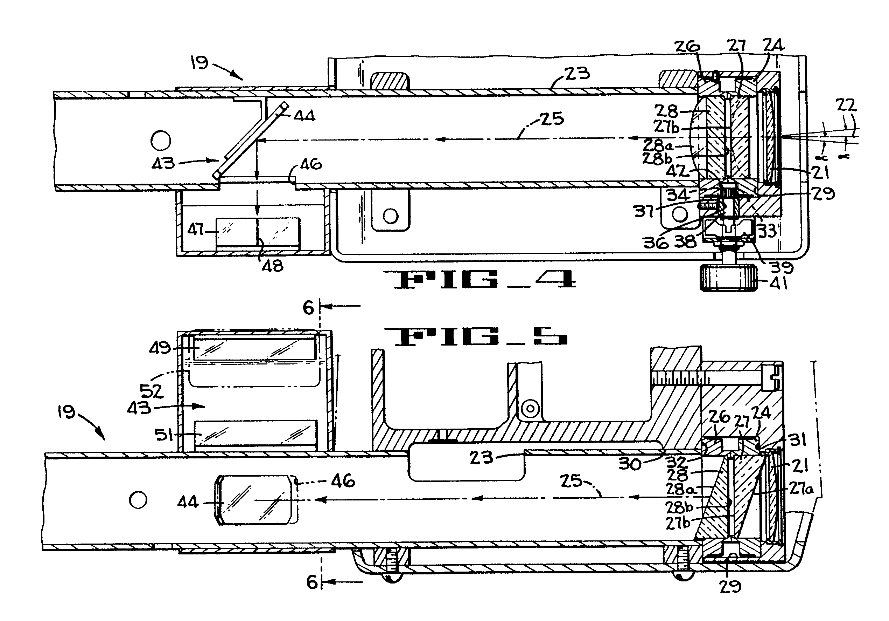

If it is desirable or required to erect the real image formed by the objective lens 21 at the oblique mirror 47, an arrangement of erecting mirrors 49 and 51 as shown in Figure 6 may be used. The image may thereby be erected before the rays are directed to a viewing lens 52 which may provide some magnification, by a factor of 2 for example, for the image for presentation to an observer. The observing point is ideally situated at an eye relief distance of about 20,3 to 30,5 from the surface of the viewing lens 52 so that an operator will not have to stoop too close to the viewing lens to ascertain the direction in which the aimable viewfinder is being aimed.

Returning now to Figure 1 of the drawings, the viewing path or lines of sight 22 may be seen emanating from the rear portions of the alignment heads 11 and 12. The lines of sight are directed toward points 53 and 54 which are equidistant from a point along the centerline 16 of the vehicle chassis. Specifically, the points 53 and 54 are equidistant from the midpoint between the nonsteerable wheels 17 and 18. The reference position for the viewing path 22 is in a direction which is parallel to the rotation planes of the wheels upon which the aligner heads are mounted, the front steerable wheels 13 and 14 in the embodiment

3

of Figure 1. The viewing paths 22 may be seen to diverge from the reference direction by an angle AR for the steerable wheel 13 and AL for the steerable wheel 14.

A mounting error known as runout is usually present when an alignment head is mounted on a vehicle wheel. The alignment heads utilized herein may have runout compensation structure included therein such as that disclosed in US—A—4,180,915, 4,192,074, 4,138,825. Such a runout angle for a particular rotational position of the right steerable wheel 13 is shown as ER and for the left steerable wheel 14 as EL in Figure 1. Runout compensation values in accordance with the runout angles may be stored in a microcomputer (not shown) which is associated with the alignment heads 11 and 12 so that the departure angle signals for the sighting system of each wheel may be corrected to bring the "home" position for each sighting system effectively precisely parallel to the plane of its associated wheel.

With the foregoing in mind the following quantity definitions and relationships provide information identifying individual steerable wheel toe in relation to the vehicle chassis centerline 16 as seen in Figure 1. It should be noted that the quantities AR and AL as combined and corrected here provide a quantity which is indicative of the average steering direction of the steerable wheels 13 and 14. The quantities R and L are signals generated by the alignment heads 11 and 12 respectively which relate to the individual toe of the steerable wheels.

$$AL=\text{SIGNAL VALUE FROM L AIMABLE SIGHT (POS. IN)}$$

$$AR=\text{SIGNAL VALUE FROM R AIMABLE SIGHT (POS. IN)}$$

$$L=\text{TOE SIGNAL VALUE OF L PROJECTOR}$$

$$R=\text{TOE SIGNAL VALUE OF R PROJECTOR}$$

$$EL=\text{RUNOUT VALUE OF L UNIT MOUNTING (STORED)}$$

$$ER=\text{RUNOUT VALUE OF R UNIT MOUNTING (STORED)}$$

$$S=\text{AV. STEERING DIRECTION OF FRONT WHEELS}$$

$$=\frac{(AL-EL)-(AR-ER)}{2} \quad \text{(POS. CW FROM CENTERLINE)}$$

$$Tav=1/2 \text{ TOTAL TOE (POS. IN AT FRONT)}$$

$$=\frac{(L-EL)+(R-ER)}{2}$$

$$TL=\text{ACTUAL L TOE AT SETTING}$$

$$=Tav+S=\frac{(L+R)+(AL-AR)}{2}-EL$$

$$Kt=\text{CORRECTION FACTOR FOR INDIVIDUAL TOE}$$

$$=L-TL=\frac{(L-R)-(AL-AR)}{2}+EL \text{ (STORE)}$$

$$tL=L-Kt=\text{CORR. L TOE AT ANY SETTING (DISPLAY)}$$

$$tR=R+Kt=\text{CORR. R TOE AT ANY SETTING (DISPLAY)}$$

The foregoing illustrates how the quantities are combined to provide an average steering direction quantity for the steerable front wheels 13 and 14 as well as how an actual toe setting signal TL is obtained for the left steerable wheel 14 by utilizing one half the total toe signal provided by the alignment heads 11 and 12 and the average steering direction signal. The actual left toe is obtained in accordance with the appropriate sign conventions by adding the average steering direction signal to the one half total toe signal to obtain the actual left toe indicative signal and by subtracting the average steering direction signal from the one half total toe signal to obtain the actual right toe indicative signal in the embodiment of Figure 1. Once the alignment heads 11 and 12 have been set up as shown in Figure 1 a correction factor may be obtained by comparing the individual toe signal (L or R) provided by either alignment head with the actual toe indicative signal (TL or TR). The difference between the signals is equivalent to a correction factor which may then be stored and utilized for correcting the individual toe signal (L or R) provided by each alignment head (12 or 11) while the toe of either of the front steerable wheels 14 or 13 is adjusted or the steering direction of both wheels is changed. Sign convention requires that the correction factor be continuously added to the signal from the left projector and continuously subtracted from the signal from the right projector.

With reference now to Figure 2 of the drawings the pair of front steerable wheels 13 and 14 are shown together with a pair of nonsteerable rear wheels 17 and 18 with the alignment heads 11 and 12 mounted on the nonsteerable rear wheels. The alignment heads are reversed on the rear wheels in order to find clearance under the vehicle for the cross toe measurements L' and R' as shown in Figure 2. As a result the sign of the toe signal must be changed and the values derived by the alignment head 12 must be displayed on the right meter and the values derived by the alignment head 11 must be displayed on the left meter because they are mounted on the right and left rear wheels respectively. A front and rear wheel mode selection switch (not shown) is provided so that the switch may be selected to the position which conforms with the position at which the alignment heads are mounted, front or rear. A correction factor switch (not shown) is also provided so the appropriate correction factors and average rear wheel rolling direction signal may be stored when appropriate.

With the alignment heads 11 and 12 mounted on the nonsteerable rear wheel pair 17 and 18, targets 56 and 57 about 17,8 cm in length and having graduated scales thereon are mounted at the axes of the front steerable wheel 13 and 14 as shown. The aimable viewfinders as disclosed hereinbefore are adjusted by means of the knobs 41 (Figure 4) so that the index lines 48 in each of the aimable viewfinders appears at the same graduated point on the target graduated scales 56 and 57. The viewing paths 22 are therefore directed to points which are equidistant from a point on the chassis centerline, specifically the midpoint between the front steerable wheels 13 and 14. An electrical signal is therefore generated by each potentiometer 39 in the aimable viewfinders 19, wherein the signals are indicative of the angles A'L and A'R as seen in Figure 2. The runout Errors E'L and E'R are obtained as hereinbefore described and together with the individual toe signal values L' and R' are used to perform calculations in accordance with the following relationships.

$$D = \text{AV. REAR ROLL DIRECTION (POS. CW)}$$

$$= \frac{(A'L - E'L) - (A'R - E'R)}{2} \quad \text{(STORE FOR FRONT TOE COMP.)}$$

$$T'av = 1/2 \text{ TOTAL REAR TOE (POS. IN AT REAR)}$$

$$= \underline{(L' - E'L) + (R' - E'R)}$$

$$T'L = \text{REVERSED ACTUAL R REAR TOE}$$

$$= T'av + D = \underline{(L' + R') + (A'L - A'R)} - E'L$$

$$K't = \text{CORR. FACTOR FOR INDIV. REAR TOE}$$

$$= L' - T'L = \frac{(L' - R') - (A'L - A'R)}{2} + E'L \quad \text{(STORE)}$$

$$t'L = \text{INDIV. RIGHT REAR TOE}$$

$$= (L' - K't) \times (-1) \quad \text{(DISPLAY ON R METER)}$$

$$t'R = \text{INDIV. LEFT REAR TOE}$$

$$= (R' + K't) \times (-1) \quad \text{(DISPLAY ON L METER)}$$

It may be seen from the foregoing relationships that the quantity D is representative of the average rolling direction of the pair of rear wheels 17 and 18 and is obtained by combining the signals which indicate the deviations of the lines of sight 22 from a direction parallel to the planes of the wheels 17 and 18. The actual toe for the left rear wheel is computed relative to the chassis centerline 16 by adding the average rolling direction for the rear wheels to a quantity provided by the alignment heads equal to one half of the total toe of the rear wheels and the actual toe for the right rear wheel is computed by subtracting the rear rolling direction quantity from the half total rear toe signal. The correction factor K't may be computed with the setup as described for Figure 2 by subtracting the actual real toe for either wheel from the individual toe signal value provided by the corresponding alignment head. With the alignment mode switch set to the rear wheel position, a correction factor switch is actuated which stores the correction factor and average rear rolling direction signals to be used for purposes to be hereinafter described. The correction factor K't is used of course to provide the corrected individual rear toe displays so that subsequent rear wheel toe adjustment may be appropriately corrected when made for the chassis for which the rear wheel toe correction factor K't was obtained.

Subsequent to obtaining the rear wheel toe relative to the chassis centerline 16 and the signal indicative of the average rear wheel rolling direction the aligner heads 11 and 12 are removed from the left and right rear wheels 18 and 17 respectively and mounted on the right and left front steerable wheels 13 and 14 respectively as shown in Figure 3. Once again the aimable viewfinders are aimed at a pair of points which are equidistant from a point on the vehicle centerline, preferably the midpoint between the nonsteerable wheels 17 and 18. The points are identified in the embodiment of Figure 3 by directing the viewing paths or lines of sight 22 to like points on the scales 56 and 57 now mounted on the axes of the nonsteerable wheels 17 and 18 respectively. The aiming of the viewfinders generates an electrical signal which is proportional to the angle between the optical axis or line of sight and the plane of the steerable wheel on which a particular alignment head 11 or 12 is mounted. Electrical signals are obtained from the alignment system which are indicative of the total toe angle between the planes of the front wheels 13 and 14 so that the average steering direction of the front wheels may be obtained as described in conjunction with the description of Figure 1. Having thus obtained a signal which is indicative of a portion (one half) of the total toe between the front wheels (Tav), a signal which is indicative of the average steering direction of the front wheels (S''), and having fetched a signal from storage which is indicative of the average rear wheel rolling direction (D), a combination of the signals provides for actual front wheel toe settings T''L as shown in the relationships immediately following.

$$D=\text{AV. REAR ROLL DIRECTION (STORED DURING REAR WHEEL CHECK)}$$

$$T''L=\text{ACTUAL L TOE AT SETTING}$$

$$=Tav+S''-D=\frac{(L''+R'')+(A''L-A''R)-E''L-D}{2}.$$

$$K''t=L''-T''L=\frac{(L''-R'')-(A''L-A''R)+E''L+D}{2}$$

$$t''L=L''-K''t \text{ (DISPLAY ON L METER)}$$

$$t''R=R''+K''t \text{ (DISPLAY ON R METER)}$$

It may be seen from the foregoing that a correction factor for the front steerable wheels K''t may be obtained from the signals obtained from the specific setup described immediately hereinbefore by comparing an individual toe reading from one of the alignment heads 11 or 12 with the actual toe at that particular setting for either the left steerable wheel 13 or the right steerable wheel 14 respectively. The correction factor K''t obtained is placed in storage by actuating the correction factor switch (not shown) while the front and rear alignment mode switch is in the front wheel position. As explained hereinbefore, the correction factor is continuously added to the signal L'' from the left alignment head 12 and continuously subtracted from the signal R'' obtained from the right alignment head 11. The correction factor K''t may thus be combined with the individual toe indicative signals L'' and R'' from the alignment heads to continuously obtain a corrected toe signal display while individual wheel toe is being adjusted or the steering direction is being changed. The correction factor is constant for any of the situations for Figures 1 through 3 described herein and may be obtained by one careful setup of the alignment heads 11 and 12 and aimable viewfinders 19 contained therein. Thereafter, having stored the correction factor, no special care need be taken in adjusting individual toe of the wheels on the vehicle to assume predetermined toe angle inclinations, while nonetheless being assured of corrected toe inclination displays.

**Claims**

1. A method of measuring toe for wheels (13, 14) supporting a vehicle chassis wherein the wheels include pairs of nonsteerable and steerable wheels (17, 18; 13, 14), utilizing a pair of alignment heads (11, 12) adapted to be mounted on ones of the wheels and providing signals (R', L'; R'', L'') indicative of the individual toe of the wheels (17, 18; 13, 14) on which the heads (11, 12) are mounted, and an optical system (19) incorporated in each head (11, 12) having an optical axis (22) extending therefrom, comprising the steps of

mounting an alignment head (11, 12) on each of the non-steerable wheels (17, 18),

6

**0 065 139**

aiming each optical axis (22) at separate ones (56, 57) of a pair of points equidistant from a point on the centerline (16) of the vehicle chassis,

providing an electrical signal (A'R, A'L) indicative of the angular departure of each optical axis (22) from the plane of the nonsteerable wheel (17, 18) on which the respective head (11, 12) is mounted,

combining the angular departure signals (A'R, A'L) and providing and storing an average rolling direction signal (D) for the nonsteerable wheels (17, 18),

calculating a value indicative of the total toe of the nonsteerable wheels (17, 18) utilizing the individual toe signals (R', L'),

combining one-half of the total toe value with the average rolling direction value (D) to obtain an actual toe value,

removing the alignment heads (11, 12) from the non-steerable wheels (17, 18) and mounting them on the steerable wheels (13, 14),

aiming each optical axis (22) in a fixed direction at separate ones (56, 57) of a pair of points equidistant from the centerline (16) of the vehicle chassis approximately at the position of the nonsteerable wheels (17, 18),

providing an electrical signal (A''R, A''L) indicative of the angular departure of each aimed optical axis (22) from the plane of the steerable wheel (13, 14) on which the respective head (11, 12) is mounted,

calculating a value indicative of total toe of the steerable wheels (13, 14) utilizing the steerable wheel individual toe signals (R'', L''),

combining one-half of the steerable wheel total toe and the angular departure signals with the stored nonsteerable wheel average rolling direction signal (D) so that an actual toe angle signal for each steerable wheel (13, 14) is obtained which is referenced to the nonsteerable wheel average rolling direction (D).

2. A method as in claim 1 together with the step of comparing the actual toe angle signal for each steerable wheel (13, 14) with a respective individual toe signal (R'', L'') to obtain a steerable wheel correction factor and storing the correction factor signal for application to steerable wheel individual toe for other steering angles and toe adjustments.

3. A method as in claim 1 or 2 together with the step of comparing the nonsteerable wheel actual toe signal with a respective individual toe signal (R', L') to obtain a nonsteerable wheel correction factor and storing the correction factor signal for application to nonsteerable wheel individual toe for other toe adjustments.

4. An apparatus of measuring toe for a nonsteerable wheel pair (17, 18) and a steerable wheel pair (13, 14), supporting a vehicle chassis comprising

a pair of alignment heads (11, 12) for providing an individual wheel toe signal (R, L; R', L'; R'', L'') convertible to value indicative of total toe between the wheels (13, 14; 17, 18) in each pair when mounted thereon, the alignment head pair (11, 12) being adapted for mounting equidistant from the vehicle chassis centerline (16) on the nonsteerable wheel pair (17, 18) and on the steerable wheel pair (13, 14),

each alignment head (11, 12) having an optical sighting system (19) providing an optical axis (22) generally in a direction longitudinal of the vehicle chassis,

each sighting system (19) having adjustment mechanism (24, 26, 33, 34, 42, 38) for adjusting said optical axis (22) to assume a fixed direction relative to the direction of the plane of the wheel (13, 14; 17, 18) on which it is mounted,

each adjustment mechanism (24, 26, 33, 34, 42, 38) having an electrical device (39) coupled thereto for providing an electrical output signal (AR, AL; A'R, A'L; A''R, A''L) indicative of said optical axis direction relative to respective ones of the wheel planes of the wheel pairs,

means for receiving said electrical output signals (AR, AL; A'R, A'L; A''R, A''L) and for providing a wheel pair steering direction value relative to the vehicle chassis centerline (16) when said optical axes (22) are adjusted to intercept points (53, 54; 56, 57) on the opposing wheels which are equidistant from the vehicle chassis centerline (16),

means for combining one-half of said total toe value and said wheel pair steering direction value to thereby obtain an actual toe value for each of the wheels (13, 14; 17, 18) in the pair.

5. An apparatus as in claim 4 comprising means for comparing a value corresponding to said individual toe signal at each wheel (13, 14; 17, 18) with said corresponding actual toe value thereby obtaining a toe correction factor value for each wheel (13, 14; 17, 18) in said pair, and means for storing said correction factor value, whereby said values (R, L; R', L'; R'', L'') corresponding to individual toe are continuously corrected while wheel toe is adjusted and steering direction is changed.

6. An apparatus as in claim 4 or 5, wherein said adjustment mechanism comprises a framework (23),

an objective lens (21) mounted at one end of said framework admitting light from an object being viewed along an optical axis (22),

a pair of plano prisms (27, 28),

a mounting ring (24, 26) securely holding each of said plano prisms (27, 28) in position on the image side of said objective lens (21), said mounting rings (24, 26) being disposed in said framework (23) for rotation about an axis (25) extending through said objective lens (21) so that said plano prisms (27, 28) intercept and deflect light passed by said objective lens (21) in substantially equal and opposite vertical directions,

7

means (33, 34, 37, 38, 41, 42) for turning said mounting rings (24, 26) in opposite rotational directions, whereby light passing through said objective lens (21) is deflected laterally,

said electrical device (39) coupled to said means (33, 34, 37, 38, 41, 42) for turning whereby a signal (AR, AL; A'R, A'L; A''R, A''L) is provided which is indicative of the amount of lateral deflection of said light passed through said objective lens (21),

and an optical assembly (43) positioned in said framework substantially at the back focal distance for the object and disposed to present an image of the object to an observer's position.

7. An apparatus as in claim 6, wherein said optical assembly (43) includes erecting mirrors (47, 49, 51).

8. An apparatus as in claim 6 or 7 with an index line (48) formed in said optical assembly (43), said index line (48) being disposed to indicate on the observed image the direction in which the optical axis (22) is aimed.

9. An apparatus as in claims 6 to 8, wherein said means for turning comprises a gear (33, 34) on each of said mounting rings (24, 26) and a mating gear (42) disposed between and meshed with each of said mounting ring gears (33, 34).

10. An apparatus as in claims 6 to 9, wherein said electrical device comprises a rotary potentiometer (39).


## Patentansprüche

1. Verfahren zum Messen der Radspur für Räder (13, 14), welche ein Fahrzeugchassis tragen, wobei die Räder ein Paar nicht lenkbarer und ein Paar lenkbarer Räder (17, 18; 13, 14) umfassen und ein Paar Richtköpfe (11, 12), die an dem einen der Räder montierbar sind und Signale (R', L'; R'', L'') abgeben, welche die individuelle Spur der jeweiligen der Räder (17, 18; 13, 14) angeben, an denen die Köpfe (11, 12) montiert sind, und ein in jedem Kopf (11, 12) enthaltenes optisches System (19) mit einer von diesem ausgehenden optischen Achse (22) verwendet werden, wobei

an jedem der nicht lenkbaren Räder (17, 18) ein Richtkopf (11, 12) angeordnet wird,

jede optische Achse (22) jeweils auf einen (56, 57) eines Paares von Punkten gerichtet wird, die in gleichem Abstand von einem Punkt auf der Mittellinie (16) des Fahrzeugchassis liegen,

ein elektrisches Signal (A'R, A'L) erzeugt wird, welches die Winkelabweichung jeder optischen Achse (22) von der Ebene des nicht lenkbaren Rades (17, 18) angibt, auf welchem der zugehörige Kopf (11, 12) montiert ist,

die Winkelabweichungssignale (A'R, A'L) verknüpft werden und ein gemitteltes Rollrichtungssignal (D) für die nicht lenkbaren Räder (17, 18) erzeugt und gespeichert wird,

unter Verwendung der individuellen Spursignale (R', L') ein die Gesamtspur der nicht lenkbaren Räder (17, 18) anzeigender Wert berechnet wird,

die Hälfte des Gesamtspurwertes mit dem mittleren Rollrichtungswert (D) zum Ist-Spurwert verknüpft wird,

die Richtköpfe (11, 12) von den nicht lenkbaren Rädern (17, 18) auf die lenkbaren Räder (13, 14) umgesetzt werden,

jede optische Achse (22) in einer festen Richtung auf einen eines Paares (56, 57) von Punkten gerichtet wird, die äquidistant von der Mittellinie (16) des Fahrzeugchassis annähernd an der Stelle der nicht lenkbaren Räder (17, 18) liegen,

ein elektrisches Signal (A''R, A''L) erzeugt wird, das die Winkelabweichung jeder gerichteten optischen Achse (22) von der Ebene des lenkbaren Rades (13, 14) angibt, an welchem der zugehörige Kopf (11, 12) montiert ist,

unter Verwendung der individuellen Spursignale (R'', L'') für die lenkbaren Räder (13, 14) einen deren Gesamtspur angebender Wert berechnet wird und

die Hälfte des Gesamtspurwerts für die lenkbaren Räder und die Winkelabweichungssignale mit dem gespeicherten mittleren Rollrichtungssignal (D) für die nicht lenkbaren Räder zu einem Istspurwinkelsignal für jedes lenkbare Rad (13, 14) bezüglich der mittleren Rollrichtung (D) der nicht lenkbaren Räder verknüpft werden.

2. Verfahren nach Anspruch 1, bei welchem das tatsächliche Spurwinkelsignal für jedes lenkbare Rad (13, 14) mit einem entsprechenden individuellen Spursignal (R'', L'') zum Erhalten eines Korrekturfaktors für die lenkbaren Räder verglichen wird und das Korrekturfaktorsignal zur Anwendung auf die individuellen Spurwerte für die lenkbaren Räder für andere Lenkwinkel und Spureinstellungen abgespeichert wird.

3. Verfahren nach Anspruch 1 oder 2, bei welchem das Ist-Spursignal für die nicht lenkbaren Räder mit einem entsprechenden individuellen Spursignal (R', L') verglichen wird, um einen Korrekturfaktor für die nicht lenkbaren Räder zu erhalten und das Korrekturfaktorsignal zur Anwendung auf einen individuellen Spurwert anderer nicht lenkbarer Räder zwecks Spureinstellungen abgespeichert wird.

4. Vorrichtung zur Spurmessung an einem Paar nicht lenkbarer Räder (17, 18) und einem Paar lenkbarer Räder (13, 14), welche ein Fahrzeugchassis tragen, mit

einem Paar Richtköpfe (11, 12), die individuelle Radspursignale (R; L; R', L'; R'', L'') liefern, die sich zu einem Wert umwandeln lassen, welcher die Gesamtspur zwischen den Rädern (13, 14; 17, 18) eines jeden Paares, an denen sie montiert sind, angeben, wobei das Paar Richtköpfe (11, 12) an dem Paar nicht

**0 065 139**

lenkbarer Räder (17, 18) und an dem Paar lenkbarer Räder (13, 14) in gleichen Abständen von der Mittellinie (16) des Fahrzeugchassis anbringbar ist, wobei

jeder Richtkopf (11, 12) ein optisches Suchsystem (19) mit einer allgemein längs des Fahrzeugchassis verlaufenden optischen Achse (22) aufweist,

wobei jedes Suchsystem (19) eine Einstellmechanik (24, 26, 33, 34, 42, 38) aufweist, um die optischen Achse (22) einzustellen, so daß sie in eine bestimmte Richtung in Bezug auf die Richtung der Ebene des Rades (13, 14; 17, 18) gebracht werden kann, an welchem es angeordnet ist,

wobei jede Einstellmechanik (24, 26, 33, 34, 42, 38) eine mit ihr gekoppelte elektrische Vorrichtung (39) aufweist, welche ein elektrisches Ausgangssignal (AR, AL; A'R, A'L; A''R, A''L) abgibt, welches die Richtung der optischen Achse relativ zu den jeweiligen Radebenen der Radpaare angibt, mit

einer Einrichtung, welche die elektrischen Ausgangssignale (AR, AL; A'R, A'L; A''R, A''L) empfängt und einen Radpaar-Lenkrichtungswert in Bezug auf die Mittellinie (16) des Fahrzeugchassis liefert, wenn die optischen Achsen (22) so eingestellt sind, daß sie auf Punkte (53, 54; 56, 57) an den gegenüberliegenden Rädern fallen, die gleichen Abstand von der Mittellinie (16) des Fahrzeugchassis haben, und mit

einer Einrichtung, welche die Hälfte des Gesamt-Spurwertes und den Radpaar-Lenkrichtungswert zu einem Ist-Spurwert für jedes der Räder (13, 14; 17, 18) im Paar kombiniert.

5. Vorrichtung nach Anspruch 4 mit einer Einrichtung, die einen dem individuellen Spursignal an jedem Rad (1, 3, 14; 17, 18) entsprechenden Wert mit dem entsprechenden Ist-Spurwert vergleicht und einen Spur-Korrekturfaktorwert für jedes Rad (13, 14; 17, 18) im Paar ableitet, und mit einer Einrichtung, welche den Korrekturfaktorwert abspeichert, so daß die der individuellen Spur entsprechenden Werte (R, L; R', L'; R'', L'') beim Einstellen der Radspur und beim Ändern der Lenkrichtung fortwährend korrigiert werden.

6. Vorrichtung nach Anspruch 4 oder 5, dadurch gekennzeichnet, daß die Einstellmechanik einen Rahmen (23),

eine an einem Ende des Rahmens angeordnete Objektivlinse (21, die Licht von einem entlang der optischen Achse (22) betrachteten Gegenstand aufnimmt,

ein Paar Planprismen (27, 28),

einen Lagerring (24, 26), welcher die Planprismen (27, 28) auf der Bildseite der Objektivlinse (21) sicher hält, wobei die Lagerringe (24, 26) im Rahmen (23) um eine durch die Objektivlinse (21) verlaufende Achse (25) drehbar gelagert sind, so daß die Planprismen (27, 28) Licht aus der Objektivlinse (21) in im wesentlichen gleichen und entgegengesetzten vertikalen Richtungen abfangen und umlenken,

eine Einrichtung (33, 34, 37, 38, 41, 42) zum Drehen der Lagerringe (24, 26) in entgegengesetzten Richtungen, so daß durch die Objektivlinse (21) fallendes Licht seitlich abgelenkt wird,

wobei die elektrische Einrichtung (39) mit der Dreheinrichtung (33, 34, 37, 38, 41, 42) gekoppelt ist, so daß ein Signal (AR, AL; A'R, A'L; A''R, A''L) erzeugt wird, das das Ausmaß der seitlichen Ablenkung des durch die Objektivlinse (21) tretenden Lichtes anzeigt,

und eine optische Anordnung (43) umfaßt, die im Rahmen im wesentlichen in der rückwärtigen Brennweite für den Gegenstand und so angeordnet ist, daß sie ein Abbild des Gegenstandes an der Beobachterposition erzeugt.

7. Vorrichtung nach Anspruch 6, wobei die optische Anordnung (43) Aufrichtspiegel (47, 49, 51) aufweist.

8. Vorrichtung nach Anspruch 6 oder 7 mit einer in der optischen Anordnung (43) gebildeten Indexlinie (48), die so angeordnet ist, daß sie auf dem beobachteten Abbild die Zielrichtung der optischen Achse (22) angibt.

9. Vorrichtung nach Anspruch 6 bis 8, wobei die Dreheinrichtung einen Zahnring (33, 34) auf jedem Lagerring (24, 26) und ein passendes Zahnrad (42) aufweist, das zwischen den Zahnringen (33, 34) angeordnet ist und mit beiden kämmt.

10. Vorrichtung nach Anspruch 6 bis 9, wobei die elektrische Einrichtung ein Drehpotentiometer (39) umfaßt.

**Revendications**

1. Procédé de mesure de l'alignement de roues (13, 14) supportant un châssis de véhicule comprenant des paires de roues non directrices et directrices (17, 18; 13, 14), utilisant une paire de têtes d'alignement (11, 12) conçues pour être montées sur certaines des roues et fournissant des signaux (R', L'; R'', L'') indicatifs de l'alignement individuel des roues (17, 18; 13, 14) sur lesquelles les têtes (11, 12) sont montées, et un système optique (19) incorporé dans chaque tête (11, 12) ayant un axe optique (22) s'étendant à partir de celles-ci, comprenant les étapes de:

monter une tête d'alignement (11, 12) sur chacune des roues non directrices (17, 18);

pointer chaque axe optique (22) sur des points distincts (56, 57) d'une paire de points équidistants d'un point situé sur l'axe central (16) du châssis du véhicule;

délivrer un signal électrique (A'R, A'L) indicatif de l'écart angulaire entre chaque axe optique (22) et le plan de la roue non directrice (17, 18) sur laquelle la tête respective (11, 12) est montée;

combiner les signaux d'écart angulaire (A'R, A'L) et produire et mettre en mémoire un signal de direction moyenne de roulement (D) des roues non directrices (17, 18);

9

calculer une valeur indicative de l'alignement total des roues non directrices (17, 18) en utilisant les signaux d'alignement individuel (R', L');

combiner la moitié de la valeur d'alignement total avec la valeur de direction moyenne de roulement (D) pour obtenir une valeur réelle d'alignement;

démonter les têtes d'alignement (11, 12) des roues non directrices (17, 18) et les monter sur les roues directrices (13, 14);

pointer chaque axe optique (22) dans une direction fixée sur des points distincts (56, 57) d'une paire de points équidistants de l'axe central (16) du châssis du véhicule, à peu près à la position des roues non directrices (17, 18);

délivrer un signal électrique (A''R, A''L) indicatif de l'écart angulaire entre chaque axe optique pointé (22) et le plan de la roue directrice (13, 14) sur laquelle la tête respective (11, 12) est montée;

calculer une valeur indicative de l'alignement total des roues directrices (13, 14) en utilisant les signaux d'alignement individuel des roues directrices (R'', L'');

combiner la moitié des signaux d'alignement total de roue directrice et d'écart angulaire avec le signal mémoirisé de direction moyenne de roulement de roue non directrice (D), de manière à obtenir un signal d'angle d'alignement réel pour chaque roue directrice (13, 14) qui soit référencé par rapport à la direction moyenne de roulement de roue non directrice (D).

2. Procédé conforme à la revendication 1, comprenant en outre l'étape de comparer le signal d'angle d'alignement réel pour chaque roue directrice (13, 14) à un signal d'alignement individuel respectif (R'', L'') pour obtenir un facteur de correction de roue et de mettre en mémoire ce signal de facteur de correction en vue de son application à l'alignement individuel de roue directrice pour d'autres angles d'orientation et réglages d'alignement.

3. Procédé conforme à l'une des revendications 1 ou 2 comprenant en outre l'étape de comparer le signal d'alignement réel de roue non directrice à un signal d'alignement individuel respectif (R', L') pour obtenir un facteur de correction de roue non directrice et de mémoriser ce signal de facteur de correction en vue de son application à l'alignement individuel de roue non directrice pour d'autres réglages d'alignement.

4. Appareil de mesure de l'alignement d'une paire de roues non directrices (17, 18) et d'une paire de roues directrices (13, 14) supportant un châssis de véhicule, comprenant

une paire de têtes d'alignement (11, 12) fournissant un signal d'alignement individuel de roue (R, L; R', L'; R'', L'') convertissable en valeur indicative de l'alignement total entre les roues (13, 14; 17, 18) de la paire sur laquelle elle est montée, la paire de têtes d'alignement (11, 12) étant adaptée à un montage équidistant de l'axe central (16) du châssis du véhicule sur la paire de roues non directrices (17, 18) et sur la paire de roues directrices (13, 14);

chaque tête d'alignement (11, 12) étant munie d'un système de visée optique (19) fournissant un axe optique (22) sensiblement suivant une direction longitudinale du châssis du véhicule;

chaque système de visée (19) étant muni d'un mécanisme de réglage (24, 26, 33, 34, 42, 38) pour le réglage de l'axe optique (22) suivant une direction fixe par rapport à la direction du plan de la roue (13, 14; 17, 18) sur laquelle il est monté;

chaque méchanisme de réglage (24, 26, 33, 34, 42, 38) ayant un dispositif électrique (39) auquel il est relié pour donner un signal électrique de sortie (AR, AL; A'R, A'L; A''R, A''L) indicatif de la direction de l'axe optique par rapport à certains plans respectifs des plans de roue des paires de roues;

des moyens de réception de ces signaux électriques de sortie (AR, AL; A'R, A'L; A''R, A''L) et de génération d'une valeur de direction d'orientation de la paire de roues par rapport à l'axe central (16) du châssis du véhicule quand les axes optiques (22) sont réglés pour intercepter des points (53, 54; 56, 57) équidistants de l'axe central (16) du châssis du véhicule, et situés sur les roues opposées;

des moyens de combinaison de la moitié de la valeur d'alignement total et de la valeur de la direction d'orientation de la paire de roues pour obtenir ainsi une valeur réelle d'alignement pour chacune des roues (13, 14; 17, 18) de la paire.

5. Appareil conforme à la revendication 4 comprenant des moyens pour comparer une valeur correspondant au signal d'alignement individuel de chaque roue (13, 14; 17, 18) à la valeur correspondante d'alignement réel de manière à obtenir une valeur de facteur de correction d'alignement pour chaque roue (13, 14; 17, 18) de la paire, et des moyens pour mémoriser cette valeur de facteur de correction ce qui permet la correction continue des valeurs (R, L; R', L'; R'', L'') correspondant à l'alignement individuel tandis que l'alignement de roue est réglé et que la direction d'orientation est modifiée.

6. Appareil conforme à l'une des revendications 4 et 5, dans lequel le mécanisme de réglage comprend un bâti (23);

une lentille objectif (21) montée à une extrémité du bâti et recevant de la lumière d'un objet vu sur un axe optique (22);

une paire de prismes plans (27, 28);

un anneau de montage (24, 26) maintenant solidairement chacun de ces prismes plans (27, 28) en position du côté image de la lentille objectif (21), ces anneaux de montage (24, 26) étant disposés dans le bâti (23) de façon à pouvoir tourner autour d'un axe (25) traversant la lentille objectif (21) de sorte que les prismes plans (27, 28) interceptent et dévient la lumière ayant traversé la lentille objectif (21) suivant des directions verticales sensiblement égales et opposées;

**0 065 139**

des moyens d'entraînement en rotation (33, 34, 37, 38, 41, 42) des anneaux de montage (24, 26) dans des directions de rotation opposées, provoquant une déviation latérale de la lumière traversant la lantille objectif (21);

le dispositif électrique (39) couplé à ces moyens (33, 34, 37, 38, 41, 42) d'entraînement en rotation fournissant un signal (AR, AL; A'R, A'L; A''R, A''L) indicatif de la valeur de la déflexion latérale de la lumière ayant traversé la lentille objectif (21); et

un ensemble optique (43) placé dans le bâti sensiblement à la distance focale postérieure de l'objet et disposé pour présenter une image de l'objet à une position d'observateur.

7. Appareil conforme à la revendication 6, dans lequel l'ensemble optique (43) comprend des miroirs de redressement (47, 59, 51).

8. Appareil conforme à l'une des revendications 6 et 7, ayant un réticule (48) formé dans l'ensemble optique (43), ce réticule étant disposé pour indiquer sur l'imge observée la direction de pointage de l'axe optique (22).

9. Appareil conforme à l'une des revendications 6 à 8, dans lequel les moyens de mise en rotation comprennent un engrenage (33, 34) sur chacun des anneaux de montage (24, 26) et un engrenage de couplage (42) disposé entre chacun des engrenages d'anneau de montage (33, 34) et couplé avec eux.

10. Appareil conforme à l'une des revendications 6 à 9, dans lequel le dispositif électrique comprend un potentiomètre rotatif (39).

11

FIG_1

FIG_2

FIG_3

FIG_4

FIG_5

FIG_7

27b
28b
27a
27
24
28a
26
28

FIG_6

52
49
43
51
47
23
44
46

FIG_8

24
26
33
39
38
28
34
42